Europäisches Patentamt

European Patent Office

Office européen des brevets

(11) Veröffentlichungsnummer: **0 516 966 A1**

## (12) EUROPÄISCHE PATENTANMELDUNG

(21) Anmeldenummer: **92107153.6**

(22) Anmeldetag: **27.04.92**

(51) Int. Cl.5: **B62D 1/19, B62D 1/18**

(30) Priorität: **07.06.91 DE 4118863**

(43) Veröffentlichungstag der Anmeldung:
**09.12.92 Patentblatt 92/50**

(84) Benannte Vertragsstaaten:
**DE ES FR GB IT SE**

(71) Anmelder: **AUDI AG**
**Postfach 10 02 20**
**W-8070 Ingolstadt(DE)**

(72) Erfinder: **Killian, Friedrich, Dipl.-Ing.**
**Am Sportplatz 11**
**W-8079 Hitzhofen(DE)**
Erfinder: **Schneeweiss, Manfred**
**Vorwerkstrasse 42**
**W-8071 Wettstetten(DE)**

(74) Vertreter: **Geissler, Manfred**
**Audi AG, Abteilung I/EXA-1, Postfach 10 02 20**
**W-8070 Ingolstadt(DE)**

(54) **Kraftfahrzeuglenkung mit einer ein Lenkrad tragenden längsvertellbaren Lenksäule.**

(57) Bei einer nach der Erfindung ausgeführten Kraftfahrzeuglenkung mit einer ein Lenkrad (4) tragenden längsverstellbaren Lenksäule (2) ist diese in der eingestellten Position kraftschlüssig von einem Klemmkörper (30) einer Lenksäulenaufnahme gehalten, an dem eine Sicherheitseinrichtung mit einem eine im wesentlichen in Lenksäulenlängsrichtung gerichtete Zugkraft (F) einleitenden Seil (43) angreift, um im Falle eines Unfalles das Lenkrad (4) aus dem Kopfaufschlagbereich des Fahrers wegzubewegen.

Der Klemmkörper (30) umgreift dabei die Lenksäule (2) in der Weise, daß beim Wirksamwerden der Sicherheitseinrichtung ein Verkanten des Klemmkörpers (30) und dabei ein starker, zumindest für die Übertragung der Seil-Zugkraft (F) ausreichender Anstieg des Kraftschlusses auftritt.

Damit ist trotz konstruktiv einfachem Aufbau beim Wirksamwerden der Sicherheitseinrichtung eine totwegfreie und somit sofortige Umsetzung in eine Axialverschiebung der Lenksäule (2) möglich.

FIG.1

EP 0 516 966 A1

Die Erfindung bezieht sich auf eine Kraftfahrzeuglenkung mit einer ein Lenkrad tragenden längsverstellbaren Lenksäule, die in der eingestellten Position kraftschlüssig von einem Element einer Lenksäulenaufnahme gehalten wird, wobei an dem Element eine Sicherheitseinrichtung mit einem eine im wesentlichen in Lenksäulenlängsrichtung gerichtete Zugkraft einleitenden Teil (Seil) angreift, um im Falle eines Unfalles das Lenkrad aus dem Kopfaufschlagbereich des Fahrers wegzubewegen.

Eine gattungsgemäße Kraftfahrzeuglenkung ist durch die DE 36 42 437 C1 bekannt geworden.

Eine absichtlich hervorgerufene Axialverschiebung des Lenkrades zum Zeitpunkt eines Unfalles (Frontalzusammenstoß) ist in sicherheitstechnischer Hinsicht eine ausgesprochen wirksame Maßnahme. Diesem Umstand trägt bereits die Einrichtung gemäß der DE 33 37 232 A1 im weitesten Sinne Rechnung. In dieser Druckschrift ist ein Fahrzeug mit einem in seinem Frontbereich angeordnetem Antriebsaggregat und einer Vorrichtung zur Nutzung der Aufprallenergie für eine Sicherheitseinrichtung zum Schutz der Fahrzeuginsassen beschrieben, wo unter Ausnutzung einer bei einem Frontalzusammenstoß auftretenden Relativbewegung zwischen dem Antriebsaggregat und der Fahrzeugkarosserie die Sicherheitseinrichtung in Wirkstellung gebracht wird. Die Vorrichtung umfaßt dabei ein Seil, welches unter Zwischenschaltung einer Umlenkeinrichtung am Antriebsaggregat und an der Lenksäule befestigt ist. Damit wird die sich bei einem Frontalzusammenstoß bestimmter Größenordnung ergebende Veränderung des Abstandes zwischen dem Antriebsaggregat und einem außerhalb der Knautschzone gelegenen Karosseriebauteil in eine Axialbewegung der Lenksäule umgesetzt.

Die dieses Wirkprinzip ebenfalls anwendende gattungsbildende Druckschrift DE 36 42 437 C1 beschreibt eine Lenksäulenhalterung, bei der an einem stationären Querträger ein Lenksäulen-Haltebügel befestigt ist, entlang dessen wirksamer Länge Anlenk- bzw. Befestigungsstellen für ein Zugelement (Seil) und eine Lenksäuleneinheit angeordnet sind, wobei ein Teil der Lenksäuleneinheit mit dem Haltebügel über zwei aufeinander senkrecht stehende Längsnuten und eine darin geführte Arretierschraube lösbar und mittels Kraftschluß (durch das Festziehen der Arretierschraube) verbunden ist. Eine im Haltebügel angeordnete Längsnut erlaubt die Längsverstellung der Lenksäule.

Da die Kraftschlußverbindung in der Regel nicht ausreicht, die beim Wirksamwerden der Sicherheitseinrichtung auf den Haltebügel eingeleitete Kraft zuverlässig in eine Axialverschiebung der Lenksäuleneinheit umzusetzen, entsteht im ersten Augenblick der Schwenkbewegung des Haltebügels eine geringfügige Zeitverzögerung, bis auch die Lenksäuleneinheit bewegt wird. Dies tritt spätestens dann ein, wenn die Arretierschraube am unteren Ende der Längsnut zur Anlage kommt.

Ziel der Erfindung ist es, hier eine weitere Optimierung herbeizuführen.

Der Erfindung liegt daher die Aufgabe zugrunde, eine Kraftfahrzeuglenkung der gattungsgemäßen Art vorzustellen, die trotz konstruktiv besonders einfachem Aufbau beim Wirksamwerden der Sicherheitseinrichtung eine totwegfreie und somit sofortige Umsetzung in eine Axialverschiebung der Lenksäule zuläßt.

Diese Aufgabe wird erfindungsgemäß mit einer Kraftfahrzeuglenkung gelöst, die die Merkmale des Patentanspruches 1 aufweist.

Weitere vorteilhafte Merkmale enthalten die Weiterbildungen der Erfindung, wie sie mit den Unteransprüchen beansprucht sind.

Ein Ausführungsbeispiel der Erfindung ist in der Zeichnung dargestellt und wird im folgenden erläutert. Es zeigt

**Fig. 1** einen die erfindungswesentlichen Elemente enthaltenden Abschnitt der Kraftfahrzeuglenkung,

**Fig. 2** eine teilgeschnittene Draufsicht der Darstellung gemäß Fig. 1 in anderem Maßstab und

**Fig. 3** eine Seitenansicht der Darstellung nach Fig. 2 mit Teilschnitt gemäß Pfeile III.

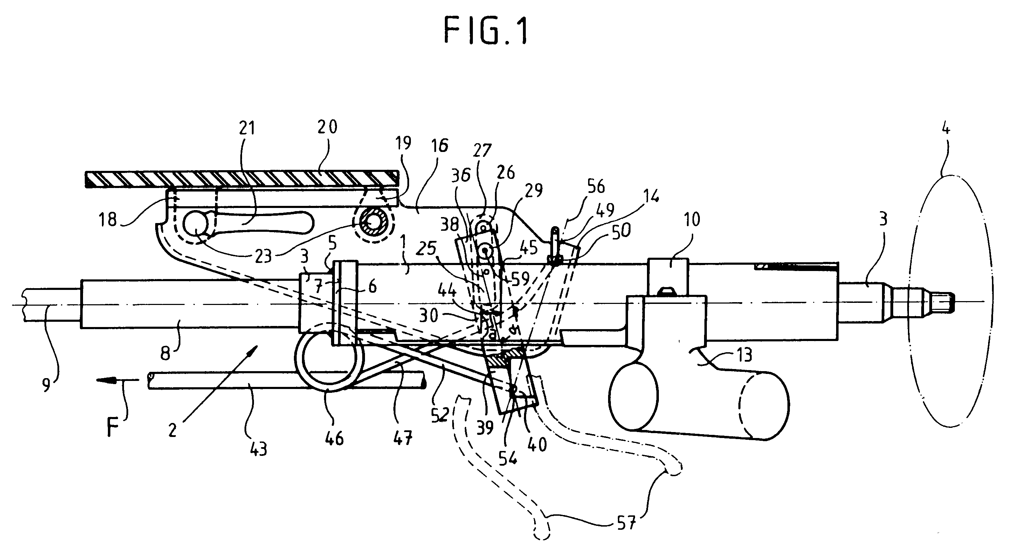

In Fig. 1 ist ein Mantelrohr 1 einer längsverstellbaren Lenksäule 2 gezeigt, welches ein Lenkrohr 3 aufnimmt, das darin axial unverschieblich aber verdrehbar gelagert ist, endseitig herausragt und, wie schematisiert gezeigt, ein Lenkrad 4 trägt.

Die axiale Unverschieblichkeit ergibt sich unter anderem dadurch, daß das gegenüberliegende, ebenfalls aus dem Mantelrohr 1 herausragende Endstück des Lenkrohres 3 mit einem angeschweißten (Schweißnaht 5) Bund 6 ausgestattet ist, an den eine Stirnfläche 7 des Mantelrohres 1 zur Anlage kommt.

Aus dem Lenkrohr 3 ragt eine mit ihm zwar drehfest verbundene, aber im Sinne einer Teleskopverbindung geführte Lenkstange 8 heraus, welche endseitig in bekannter Weise in ein Lenkgetriebe mündet.

Da alle bisher angeführten Funktionselemente der Lenksäule 2 konzentrisch zueinander angeordnet sind, ergibt sich eine gemeinsame Längsachse 9.

An dem dem Lenkrad 4 zugewandten Ende des Mantelrohres 1 ist auf diesem mittels Klemmbügel 10 ein Aufnahmekörper 13 für ein nicht näher gezeigtes Zündschloß befestigt.

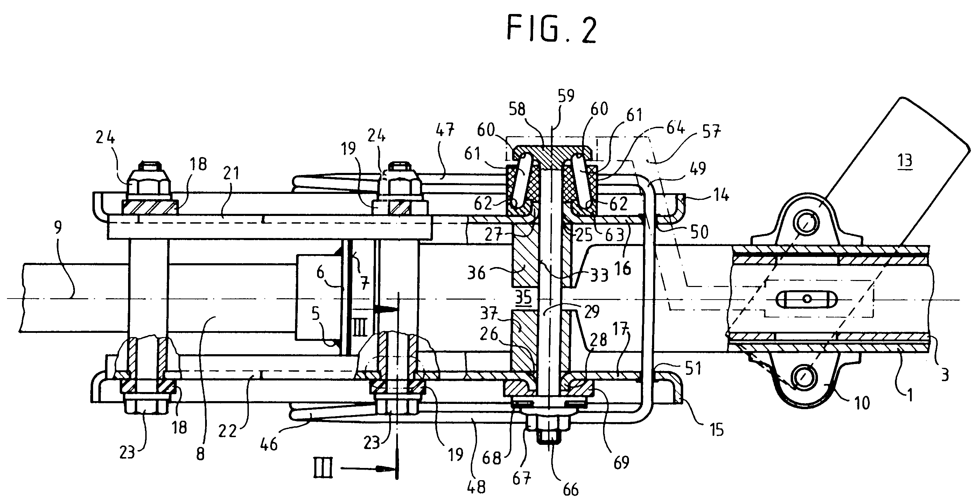

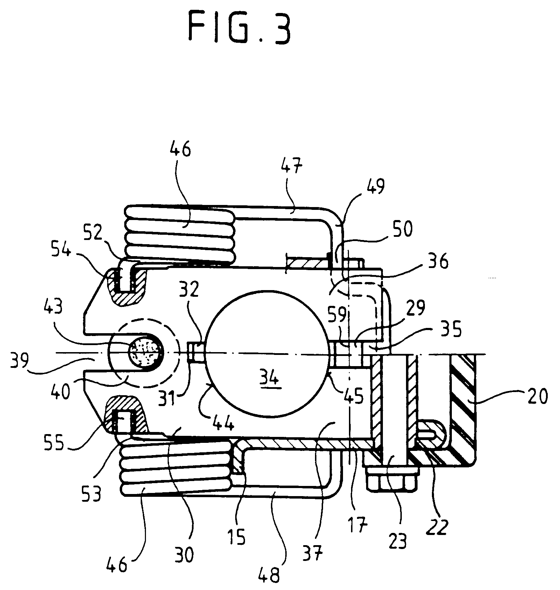

Über das Mantelrohr 1 ist die Lenksäule 2 von einer Konsole gehalten, die, wie sich aus der Zusammenschau mit den weiteren Fig. 2 und 3 ergibt, aus zwei, die Lenksäule 2 zwischen sich aufnehmenden und durch randseitige Abkantungen 14,15 versteifte Konsolenbacken 16,17 besteht, die über Laschen 18,19 eines karosseriefesten Adaptionsteiles 20 und Schraubverbindungen (Schraube 23, Mutter 24) miteinander verbunden sind.

Während eines 19 der Laschenpaare 18,19 durch entsprechende Formgebung beim Wirksamwerden der Sicherheitseinrichtung abgerissen wird, bleibt das andere 18 unversehrt, so daß die entsprechende Schraube 23 bei der Verschiebung der Konsolenbacken 16,17 in darin angeordnete und parallel zur Lenksäulen-Längsachse 9 verlaufenden Nuten 21,22 entlanggleitet.

Stattdessen wäre beispielsweise auch eine Fügeverbindung geeignet, wie sie in der DE 36 23 418 C2 beschrieben ist.

Jeder der beiden Konsolenbacken 16,17 ist zum Zwecke einer zusätzlichen (für die Erfindung allerdings nicht unbedingt erforderlichen) Höhenverstellbarkeit des Lenkrades 4 mit einer vertikal verlaufenden Nut 25,26 ausgestattet, deren Rand von einem umlaufenden, durch Abkantung entstandenen Steg 27,28 zur weiteren Versteifung gebildet wird. Durch beide Nuten 25, 26 reicht ein Klemmbolzen 29 hindurch, auf dessen nähere Funktionsweise später noch eingegangen wird. Zwischen die Konsolenbacken 16,17 ist des weiteren ein Klemmkörper 30 eingesetzt, der eine den Klemmbolzen 29 aufnehmende Bohrung 33 aufweist.

Wie sich insbesondere aus der Darstellung nach Fig. 3 ergibt, ist der Klemmkörper 30 mit einer weiteren Bohrung 34 ausgestattet, deren Querschnitt an den Außendurchmesser des darin aufgenommenen Mantelrohres 1 angepaßt ist, so daß dieses über den Klemmkörper 30 und die Konsolenbacken 16,17 karosserieseitig gehalten wird. Die Bohrung 34 läuft in einen gleichgerichteten Schlitz 35 aus, so daß dadurch zwei Klemmbacken 36,37 gebildet werden. Die Bohrung 34 ist gegenüber einer Klemmkörper-Mittenlinie 38 (Fig. 1) geneigt (Winkel α zur Lenksäulen-Längsachse 9).

Der mit einer Schienenführung 31 für eine mantelrohrseitige Schiene 32 (Verdrehsicherung) ausgestattete gegenüberliegende Bereich des Klemmkörpers 30 ist darüber hinaus mit einer Einkerbung 39 und einer sich daran anschließenden Aufnahmebohrung 40 für ein nicht näher gezeigtes Endstück eines Seiles 43 der Sicherheitseinrichtung ausgestattet. Beim Wirksamwerden der Sicherheitseinrichtung wird eine Seilkraft F wirksam, was aufgrund des seitlichen Versatzes der Wirkungslinie dieser Kraft F gegenüber der Lenksäulen-Längsachse 9 zu einem Verkanten des Klemmkörpers 30 führt, wobei sich dieser insbesondere mit den Kanten 44,45 (vgl. Fig. 1) der Bohrung 34 auf der Oberfläche des Mantelrohres 1 abstützt. Dadurch wird zumindest eine soweit ausreichende Kraftschlußverbindung hergestellt, daß sich über Mantelrohr 1 und Lenkrohr 3 das daran befestigte Lenkrad 4 aus dem Kopfaufschlagbereich des Fahrzeugführers nahezu totwegfrei wegbewegen kann.

Die Schrägstellung (Winkel α) des Klemmkörpers 30 gegenüber dem Mantelrohr 1 läßt einen für die Höhe der Verkantungskräfte maßgeblichen Abstand -a- der Bohrungskanten 44,45 entstehen, wodurch die Verkantungswirkung begünstigt und der Kraftschluß erhöht wird. Weitere Möglichkeiten zur Erhöhung der übertragbaren Kraft liegen darin, durch geeignete Maßnahmen zusätzlich einen Formschluß herzustellen. So können scharfe, gehärtete Kanten an der Klemmkörperbohrung 34 sich in die Oberfläche des Mantelrohres 1 eingraben, oder die Oberfläche des Mantelrohres 1 kann in Querrichtung mit einer feinen Riffelung versehen werden.

Damit der Klemmkörper 30 im normalen Verstellbetrieb nicht verkanten kann, sollte er abgestützt werden. Diese Funktion kann in vorteilhafter Weise von einer Feder 46 übernommen werden, die ohnehin für den Gewichtsausgleich der Lenksäule 2 vorgesehen ist. Hierzu ist die Feder 46 über zwei äußere Federbügel 47,48 bzw. einen diese verbindenden oberen Quersteg 49 im vorderen Bereich der beiden Konsolenbacken 16,17 in diesen in entsprechenden Lagerstellen 50,51 gelagert. Zwei innere Federbügel 52, 53 stützen sich an unteren Lagerstellen 54,55 am Klemmkörper 30 ab.

Die sich daraus ergebende Wirkungslinie 56 der Federkräfte üben auf den Klemmkörper 30 eine die vorbeschriebene Wirkungsweise begünstigende Abstützfunktion aus.

Die Axial- und die Höhenverstellung des Lenkrades 4 wird über einen vom Fahrer zu betätigenden Schwenkhebel 57 eingeleitet. Dieser greift am Kopf 58 des Klemmbolzens 29 an und kann diesen somit um seine Längsachse 59 verschwenken. Der Klemmbolzenkopf 28 ist auf seiner Unterseite mit einer Anzahl von Aufnahmemulden 60 für sich darin abstützende Spannstifte 61 ausgestattet, die an ihren gegenüberliegenden Enden in entsprechende Mulden 62 eines an der Konsolenbacke 16 anliegenden Ringes 63 eingreifen. Die Spannstifte 61 sind weiterhin in einem Aufnahmekörper 64 derart gehalten, daß sie beim Verdrehen des Klemmbolzenkopfes 58 eine gegenüber dessen Längsache 59 windschiefe (also keine gemeinsame Ebene bildende) Lage einnehmen können, so daß ihre wirksame Länge reduziert wird. Das gegenüberliegende Ende des Klemmbolzens 29 ist mit einem Gewindeabschnitt 66 versehen, wobei sich die von ihm aufgenommene Mutter 67 über eine Scheibe 68 sowie einen Stützkörper 69 an der anderen Konsolenbacke 17 abstützt.

Damit kann mittels des Schwenkhebels 57 (strichpunktierte Stellung) über den Klemmbolzen 29 auf die Konsolenbacken 16, 17, den Klemmkörper 30 und letztlich auf das Mantelrohr 1 eine einen Kraftschluß bewirkende Klemmkraft eingeleitet werden.

Ist der Schwenkhebel 57 in der in Fig. 1 gestrichelt gezeichneten Position, so ist die Klemmkraft des Klemmbolzens 29 aufgehoben, eine Axialverstellung (Mantelrohr 1 bzw. Lenkrohr 3 verschieben sich teleskopartig gegenüber der Lenkstange 8) und eine Höhenverstellung (Klemmbolzen 29 bewegt sich in den Nuten 25,26) sind möglich.

## Patentansprüche

1. Kraftfahrzeuglenkung mit einer ein Lenkrad tragenden längsverstellbaren Lenksäule, die in der eingestellten Position kraftschlüssig von einem Element einer Lenksäulenaufnahme gehalten wird, wobei an dem Element eine Sicherheitseinrichtung mit einem eine im wesentlichen in Lenksäulenlängsrichtung gerichtete Zugkraft einleitenden Teil (Seil) angreift, um im Falle eines Unfalles das Lenkrad aus dem Kopfaufschlagbereich des Fahrers wegzubewegen, **dadurch gekennzeichnet**, daß das Element als Klemmkörper (30) ausgebildet ist und die Lenksäule (2) umgreift, in der Weise, daß beim Wirksamwerden der Sicherheitseinrichtung ein Verkanten des Klemmkörpers (30) und dabei ein starker und zumindest für die Übertragung der Zugkraft ausreichender Anstieg des Kraftschlusses auftritt.

2. Kraftfahrzeuglenkung nach Anspruch 1, **dadurch gekennzeichnet,** daß der Klemmkörper (30) mit einer Bohrung (34) ausgestattet ist, deren Querschnitt an den Außendurchmesser eines darin aufgenommenen Mantelrohres (1) der Lenksäule (2) angepaßt ist.

3. Kraftfahrzeuglenkung nach Anspruch 2, **dadurch gekennzeichnet,** daß die Bohrung (34) in einen gleichgerichteten Schlitz (35) ausläuft, so daß zwei Klemmbacken (36,37) gebildet werden, während ein dem Schlitz (35) gegenüberliegender Bereich des Klemmkörpers (30) mit einer Verdrehsicherung (31, 32) sowie einer Einkerbung (39) und einer sich daran anschließenden Aufnahmebohrung (40) zur Aufnahme eines Endstückes eines im wesentlichen parallel zur Lenksäulen-Längsachse verlaufenden Seiles (43) der Sicherheitseinrichtung ausgestattet ist.

4. Kraftfahrzeuglenkung nach Anspruch 2, **da-** **durch gekennzeichnet,** daß die Klemmkörper-Mittenlinie (38) mit der Lenksäulen-Längsachse (9) einen spitzen Winkel α einschließt; wodurch einander gegenüberliegende Kanten (44,45) der Bohrung (34) einen die Höhe der Verkantungskräfte bestimmenden Abstand (a) in Richtung der Lenksäulen-Längsachse (9) aufweisen.

5. Kraftfahrzeuglenkung nach Anspruch 2, **dadurch gekennzeichnet,** daß die Bohrung (34) des Klemmkörpers (30) scharfkantig und der Werkstoff zumindest in diesem Bereich gehärtet ist.

6. Kraftfahrzeuglenkung nach Anspruch 2, **dadurch gekennzeichnet,** daß die Oberfläche des Mantelrohres (1) zumindest im Bereich ihres Kontaktes mit dem Klemmkörper (30) eine feine Riffelung aufweist.

7. Kraftfahrzeuglenkung nach Anspruch 1, **dadurch gekennzeichnet,** daß der Klemmkörper (30) von ihn umgreifenden, karosserieseitig gehaltenen Konsolenbacken (16,17) über einen Klemmbolzen (29) gehalten wird.

8. Kraftfahrzeuglenkung nach Anspruch 7, **dadurch gekennzeichnet,** daß eine dem Gewichtsausgleich der Lenksäule (2) dienende Feder (46) über zwei äußere Federbügel (47,48) bzw. einen diese verbindenden oberen Quersteg (49) im vorderen Bereich der beiden Konsolenbacken (16,17) in diesen in entsprechenden Lagerstellen (50,51) gelagert ist, während zwei innere Federbügel (52,53) sich an unteren Lagerstellen (54,55) am Klemmkörper (30) abstützen.

FIG.1

FIG. 2

# FIG.3

Europäisches Patentamt

**EUROPÄISCHER RECHERCHENBERICHT**

Nummer der Anmeldung

EP 92 10 7153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-C-3 642 437 (AUDI) <br> * das ganze Dokument * <br> --- | 1 | B62D1/19 <br> B62D1/18 |
| D,A | DE-A-3 623 418 (AUDI) <br> * das ganze Dokument * <br> --- | 1 | |
| D,A | DE-A-3 337 232 (AUDI) <br> * das ganze Dokument * <br> ----- | 1 | |
| | | | **RECHERCHIERTE SACHGEBIETE (Int. Cl.5)** <br><br> B62D |

Der vorliegende Recherchenbericht wurde für alle Patentansprüche erstellt

| Recherchenort | Abschlußdatum der Recherche | Prüfer |
|---|---|---|
| DEN HAAG | 11 SEPTEMBER 1992 | PIRIOU J.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................
& : Mitglied der gleichen Patentfamilie, übereinstimmendes Dokument